**Europäisches Patentamt**

**European Patent Office**

**Office européen des brevets**

(19)

(11) **EP 0 780 189 A1**

(12) **EUROPÄISCHE PATENTANMELDUNG**

(43) Veröffentlichungstag:
25.06.1997 Patentblatt 1997/26

(51) Int. Cl.$^6$: **B23K 23/00**, C22B 5/04

(21) Anmeldenummer: 96119669.8

(22) Anmeldetag: 07.12.1996

(84) Benannte Vertragsstaaten:
**AT BE CH DE DK ES FI FR GB GR IE IT LI LU NL PT SE**

(30) Priorität: **22.12.1995 DE 19548462**

(71) Anmelder: **Elektro-Thermit GmbH**
**D-45139 Essen (DE)**

(72) Erfinder:
• **Eggert, Horst**
**46286 Dorsten (DE)**
• **Steinhorst, Michael, Dr.**
**45355 Essen (DE)**

(74) Vertreter: **Rotenberg, Klaus, Dr.**
**c/o Th. Goldschmidt AG**
**Patentabteilung**
**Goldschmidtstrasse 100**
**45127 Essen (DE)**

(54) **Verfahren zur aluminothermischen Erzeugung einer Stahlschmelze**

(57)  Verfahren zur aluminothermischen Erzeugung einer Stahlschmelze für das aluminothermische Verschweißen von Werkstücken, wobei man die aluminothermische Reaktion in einem Tiegel aus porösem oder hohlkugelförmigem $\alpha$-$Al_2O_3$ mit einer Dichte von 0,8 bis 3,0 g/cm$^3$ und einem Schüttgewicht von 0,3 bis 1,8 g/cm$^3$ durchführt.

EP 0 780 189 A1

**Beschreibung**

Das aluminothermische Schweißverfahren nutzt als einziges der bekannten Schmelzschweißverfahren eine chemische Reaktion zur Erzeugung des heißflüssigen Schweißwerkstoffes aus.

Hierbei wird die große Affinität des Aluminiums zum Sauerstoff genutzt, um Schwermetalloxide, bevorzugt Eisenoxid, zu reduzieren.

Der stark exotherm verlaufende Prozeß läßt sich beschreiben als

$$Schwermetalloxid + Aluminium \rightarrow Schwermetall + Aluminiumoxid + Wärme$$

oder für die Eisen-Reaktion

$$Fe_2O_3 + 2\ Al \rightarrow 2\ Fe + Al_2O_3 + 849\ kJ.$$

Die aluminothermische Reaktion läuft nach punktförmiger Entzündung mit einem geeigneten Zündmittel, z. B. einem Anzündstäbchen in einem Tiegel in wenigen Sekunden unter starker Wärmeentwicklung ab. Die über 2 000 °C heißen Reaktionsprodukte trennen sich danach, wobei die spezifisch leichtere Schlacke ($Al_2O_3$) auf dem Eisen schwimmt.

Den Grundbestandteilen der Reaktionsmischung - Eisenoxid und Aluminium geringer Korngröße - werden gekörnte Stahlpartikel zur Dämpfung der Reaktion und je nach zu verschweißendem Grundwerkstoff Stahlbildner wie C, Mn, Cr, V, Mo untergemischt.

Der entstehende heißflüssige THERMIT-Stahl definierter Zusammensetzung eignet sich hervorragend für schweißtechnische Zwecke.

Das Schweißverfahren läßt sich durch folgende Arbeitsschritte charakterisieren:

- Ausrichten der Werkstücke, die mit einer vom Schweißquerschnitt und Verfahren abhängigen Lücke verlegt werden;

- Einformen der Schweißstelle mit einer feuerfesten Form;

- Vorwärmen der Werkstückenden mittels Spezial-Brenner mit Gas/Luft-, Benzin/Luft-, Benzin/Sauerstoff-, Acetylen/Sauerstoff-, Propan/Luft oder bevorzugt Propan/Sauerstoff-Gemischen;

- Einguß des heißflüssigen Stahls in die Form und Verschweißen der Werkstückenden.

Nach diesem Verfahren können Werkstücke aller Art mit beliebigen Querschnitten bei der Konstruktion oder Reparatur verschweißt werden. Seine größte Verbreitung hat das aluminothermische Schweißverfahren wegen seiner einfachen und von äußeren Energiequellen unabhängigen Ausführung bei der Schienenschweißung gefunden.

Bei dem heute üblichen Schweißverfahren findet die aluminothermische Reaktion in einem Tiegel statt, der üblicherweise aus Tabularoxid, Magnesit oder $SiO_2$ besteht.

Aufgrund des niedrigen Schmelzpunktes von $SiO_2$ (Tm = 1 723 °C) im Vergleich zu $Al_2O_3$ (Tm = 2 072 °C) und MgO (Tm = 2 852 °C) ist ein mehrfacher Einsatz eines $SiO_2$-Tiegels nicht möglich. Daher sind $Al_2O_3$ und MgO zu bevorzugen, wobei $Al_2O_3$ noch den Vorteil hat, daß es insofern ein arteigenes Material ist, weil es auch während der aluminothermischen Reaktion entsteht.

Vorzugsweise verwendet man daher Tiegel, die aus Tabularoxid hergestellt werden. Tabularoxid ist ein massives $Al_2O_3$. Bei der THERMIT-Reaktion wird ein Gemisch aus Al, Fe-Oxid und Legierungszusätzen in einem solchen Tiegel zur Reaktion gebracht, wobei typischerweise Temperaturen von etwa 2 100 °C entstehen.

Es wurde nun überraschenderweise festgestellt, daß bei Einsatz einer THERMIT-Schweißportion gleicher Zusammensetzung in einem Reaktionstiegel identischer Geometrie, hergestellt aus einem porösen oder hohlkugelförmigen $\alpha$-$Al_2O_3$, also einem $Al_2O_3$ niedriger Dichte, nämlich einer Dichte von 0,8 bis 3,0 $g/cm^3$ und einem Schüttgewicht von 0,3 bis 1,8 $g/cm^3$, eine deutlich höhere Temperatur von durchschnittlich 2 200 °C erreicht wird. Überraschenderweise wird damit ein derartig verbessertes Formfüllverhalten des Stahls erreicht, daß die Fehlerrate, d. h. die Anzahl der Schweißungen mit Defekten in der Bruchfläche signifikant, nämlich um etwa 25 % im Vergleich zum herkömmlichen Verfahren, abnimmt.

Besonders bevorzugt wird die Reaktion ein einem Tiegel durchgeführt, der eine Dichte von 1,0 bis 2,0 $g/cm^3$ und ein Schüttgewicht von 0,4 bis 1,4 $g/cm^3$ aufweist.

Die geringere Fehlerrate bedeutet somit eine höhere Zuverlässigkeit der Schweißung und damit eine höhere Sicherheit der Schweißung vor Versagen.

Der zusätzliche Vorteil eines Tiegels aus hohlem $\alpha$-$Al_2O_3$ ist das deutlich geringere Gewicht, das aus Sicht des Arbeitnehmerschutzes von großer Bedeutung ist.

Gegenstand der Erfindung ist somit ein Verfahren zur aluminothermischen Erzeugung einer Stahlschmelze, welches dadurch gekennzeichnet ist, daß man die aluminothermische Reaktion in einem Tiegel aus porösem $\alpha$-Al$_2$O$_3$ durchführt.

Hierzu sind insbesondere poröse Korunde geeignet, die beispielsweise durch Schmelzen von kalzinierter Tonerde und Verblasen dieser Schmelze mit Luft hergestellt werden. Derartige Korundprodukte, beispielsweise bekannt als Kugelkorund, weisen gegenüber dem normalen Korund (Dichte 3,97 g/cm$^3$) eine erheblich verringerte Dichte und geringeres Schüttgewicht auf. Die Dichten solcher hohlen Aluminiumoxide liegen üblicherweise bei unterhalb 2 g/cm$^3$ und Schüttgewichten von 0,3 bis 1,5 g/cm$^3$ je nach Kornverteilung.

**Patentansprüche**

1. Verfahren zur aluminothermischen Erzeugung einer Stahlschmelze für das aluminothermische Verschweißen von Werkstücken, dadurch gekennzeichnet, daß man die aluminothermische Reaktion in einem Tiegel aus porösem oder hohlkugelförmigem $\alpha$-Al$_2$O$_3$ mit einer Dichte von 0,8 bis 3,0 g/cm$^3$ und einem Schüttgewicht von 0,3 bis 1,8 g/cm$^3$ durchführt.

2. Verfahren gemäß Anspruch 1, dadurch gekennzeichnet, daß man die aluminothermische Reaktion in einem Tiegel aus porösem oder hohlkugelförmigem $\alpha$-Al$_2$O$_3$ mit einer Dichte von 1,0 bis 2,0 g/cm$^3$ und einem Schüttgewicht von 0,4 bis 1,4 g/cm$^3$ durchführt.

**Europäisches Patentamt**

# EUROPÄISCHER RECHERCHENBERICHT

Nummer der Anmeldung

EP 96 11 9669

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | GB 578 165 A (ERIC LUX)<br>* Anspruch 1 *<br>--- | 1 | B23K23/00<br>C22B5/04 |
| Y | BRITISH CERAMIC TRANSACTIONS AND JOURNAL, Bd. 90, Nr. 4, Juli 1991, STOKE-ON-TRENT, GB,<br>Seiten 132-135, XP000235444<br>SARGEANT G K: "HOLOSPHERE - A NOVEL CERAMIC MATERIAL"<br>* das ganze Dokument *<br>--- | 1 | |
| A | US 2 340 194 A (J. C. MCMULLEN)<br>* Anspruch 1 *<br>--- | 1 | |
| A | PATENT ABSTRACTS OF JAPAN<br>vol. 017, no. 096 (M-1372), 25.Februar 1993<br>& JP 04 288954 A  (NIPPON STEEL CORP),<br>14.Oktober 1992,<br>* Zusammenfassung *<br>--- | 1 | |
| A | DATABASE WPI<br>Section Ch, Week 9420<br>Derwent Publications Ltd., London, GB;<br>Class L02, AN 94-165429<br>XP002023686<br>& SU 1 801 102 A (E REFRACTORIES IND RES DES INST) , 7.März 1993<br>* Zusammenfassung *<br>--- | 1 | **RECHERCHIERTE SACHGEBIETE (Int.Cl.6)**<br><br>B23K<br>C22B |
| A | DE 179 390 C (TH. GOLDSCHMIDT)<br>* Seite 2, Zeile 34-38 *<br>--- | 1 | |
| A | DE 90 16 340 U (ELEKTRO-THERMIT GMBH)<br>* Anspruch 1; Abbildung 1 *<br>----- | 1 | |

Der vorliegende Recherchenbericht wurde für alle Patentansprüche erstellt

| Recherchenort | Abschlußdatum der Recherche | Prüfer |
|---|---|---|
| BERLIN | 24.Januar 1997 | Sutor, W |